Europäisches Patentamt

(19) European Patent Office

Office européen des brevets

(11) Numéro de publication: **0 088 690**
**A1**

(12) ## DEMANDE DE BREVET EUROPEEN

(21) Numéro de dépôt: 83400453.3

(22) Date de dépôt: 04.03.83

(51) Int. Cl.³: **G 09 B 7/04, G 06 F 15/20**

(30) Priorité: 08.03.82 FR 8203860

(43) Date de publication de la demande: 14.09.83
Bulletin 83/37

(84) Etats contractants désignés: **AT BE CH DE GB IT LI LU NL SE**

(71) Demandeur: **AEROFORMATION, Avenue Pierre Latécoère, F-31700 Blagnac (FR)**

(72) Inventeur: Baudin, Jean André Paul, 30 Cheminement le Tintoret, F-31100 Toulouse (FR)
Inventeur: Medous Paul, 10 Rue René Cousinet, F-31130 Balma (FR)
Inventeur: Merland, Jean-Paul, 40 Chemin de Benech, F-31470 Fonsorbes (FR)
Inventeur: Talvard, Jacques, 59 Chemin Mal-Clabel, F-31500 Toulouse (FR)
Inventeur: Vellvehi, Manuel, 2 Allées du Velay Appartement 741 Ancely, F-31300 Toulouse (FR)
Inventeur: Chanchus, Bernard, 1 Descente du Ramier, F-31700 Blagnac (FR)
Inventeur: Fabresse, Anne, 122 rue du Prat, F-31770 Colomiers (FR)
Inventeur: Dedieu, Aimé, 15 rue du Tchad, F-31300 Toulouse (FR)
Inventeur: Michaud, Rémy, 1 rue des Peupliers, F-31780 Castelginest (FR)

(74) Mandataire: Beauchamps, Georges et al, Cabinet Z.Weinstein 20, avenue de Friedland, F-75008 Paris (FR)

(54) Système conversationnel avec un poste de commande pour le traitement séquentiel de matières et d'informations et procédé d'utilisation de ce système.

(57) L'invention concerne un système conversationnel avec un poste de commande par le traitement séquentiel d'une matière de nature quelconque.

Ce système de traitement, le cas échéant assisté par ordinateur, est caractérisé en ce qu'il comprend un dispositif de stockage DS de matières ou d'informations groupées en unités élémentaires (1 — n) autonomes, le cas échéant programmées, et librement associables les unes aux autres pour former des séquences désirées d'unités élémentaires, des moyens DM pour matérialiser le contenu des unités élémentaires (1 — n) supplémentaire à un endroit désiré d'une séquence, le cas échéant préétabli.

L'invention est utilisable pour l'enseignement assisté par ordinateur.

EP 0 088 690 A1

1

<u>Système conversationnel avec un poste de commande,
pour le traitement séquentiel de matières et d'informations et procédé d'utilisation de ce système</u>

La présente invention concerne un système conversationnel avec un poste de commande, pour le traitement
séquentiel de produits, fluides ou d'informations,
assisté par un ordinateur et plusieurs procédés d'utilisation d'un tel système.

On connaît déjà un système de ce type, notamment pour
l'enseignement assisté par ordinateur, dans lequel la
matière à enseigner est organisée en un certain nombre de leçons séparées les unes des autres. Chaque
leçon se présente sous forme d'une séquence entièrement programmée d'éléments d'enseignement. Le programme d'une leçon prévoit la possibilité d'une intervention à partir du poste de commande, par exemple
par un élève, dans le déroulement normal de la séquence. Mais l'endroit d'intervention dans celle-ci
est programmé et cette intervention se limite en général à une marche en arrière correspondant à un nombre d'éléments également programmé. Après l'intervention, le déroulement normal de la séquence reprend à
la position reculée. Si l'élève dans le poste de commande constate qu'il a des difficultés de suivre la leçon, en raison d'une lacune dans sa connaissance, il peut arrêter le déroulement de la leçon et se porter à une autre leçon traitant la matière qu'il ne connait pas suffisamment bien. Mais, pour revenir ensuite à sa leçon initiale, il lui faut la reprendre tout au début, car dans ce système connu, dû à sa conception de programmation même, on ne retient pas un point d'interruption. Ceci signifie que le seul point d'entrée dans une leçon est le point de départ de celle-ci. Si on voulait conserver dans la leçon le point d'interruption pour y rentrer ultérieurement à cet endroit, il faudrait programmer la leçon en conséquence. Un tel objectif est théoriquement réalisable, mais s'est avéré désavantageux dans la pratique, car il faudrait sacrifier à cette fin un certain nombre de variables de programme. Celles-ci ne seraient alors plus disponibles pour la représentation du contenu de la leçon, étant donné que le nombre de variables d'une leçon est prédéterminé.

Il ressort des remarques précédentes que le système connu présente l'inconvénient majeur qu'il est fondé sur une conception qui favorise l'établissement de leçons rigides suivant un programme déterminé par l'auteur, car toute individualisation des leçons par des possibilités d'intervention des élèves suivant leur état de connaissance, rendrait très complexe et contraignant le travail de programmation des leçons au dépens du contenu en connaissances à transmettre de celle-ci. Par contre, à l'état actuel de ce système connu, le fait d'être obligé de toute manière de reprendre une partie de leçon à la suite d'une intervention pour approfondir un sujet de la leçon, soit en revenant en arrière dans la leçon même, soit

3

en se reportant transitoirement à une autre leçon, décourage l'élève et constitue une perte de temps.

Les inconvénients du système connu, qui viennent d'être énoncés lorsque celui-ci est utilisé dans l'enseignement, se manifestent bien entendu également dans d'autres domaines d'utilisation caractérisés par un déroulement d'une séquence d'éléments ou d'opérations. En effet, chaque individualisation du système oblige de répéter au moins une partie de la séquence qui s'était déjà déroulée.

La présente invention a pour but de proposer un système conversationnel pour le traitement de choses de toute nature appropriée, assisté par ordinateur, qui ne présente pas les inconvénients du système connu et permet une individualisation, c'est-à-dire une adaptation aux conditions spécifiques de chaque utilisation.

Pour atteindre ce but, le système selon la présente invention est caractérisé en ce qu'il comprend un dispositif de stockage de données ou d'informations groupées en unités élémentaires programmées séparées et librement associables les unes aux autres pour former des séquences désirées d'unités élémentaires, des moyens pour matérialiser le contenu informationnel des unités élémentaires arrangés en une séquence et des moyens pour commander à partir du poste de commande l'insertion d'au moins une unité élémentaire supplémentaire à un endroit désiré d'une séquence, le cas échéant prédéterminé.

4

Suivant une caractéristique avantageuse de l'invention, ce système comprend également des moyens de contrôle ou de comparaison des résultats produits par une séquence d'unités élémentaires vis-à-vis de résultats de consigne.

Suivant encore une autre caractéristique de l'invention, ces moyens de contrôle ou de comparaison sont reliés au moyen de commande pour réduire une différence entre les résultats réels et de consigne par l'insertion d'unités élémentaires supplémentaires dans une séquence prédéterminée.

Le système selon la présente invention est avantageusement utilisable dans l'enseignement assisté par ordinateur.

Un procédé d'utilisation du système selon l'invention dans l'enseignement de ce type est caractérisé en ce qu'il consiste à traiter la matière à enseigner et la matière en rapport avec celle-ci, pour former une multitude d'unités d'enseignement élémentaires, séparées, librement associables les unes aux autres, à établir, le cas échéant, une séquence générale d'unités d'enseignement et à prévoir la possibilité d'individualiser cette séquence par insertion d'unités supplémentaires, par commande à partir du poste de commande.

Selon une caractéristique avantageuse de ce procédé, pour l'individualisation de la séquence, en commande à partir du poste de commande l'arrêt du déroulement de la séquence préétablie, l'incorporation des unités élémentaires désirées et la continuation du déroule-

0088690

5

ment de la séquence depuis le point d'interruption.

Suivant une autre caractéristique avantageuse, les unités supplémentaires sont des unités déjà incorporées ou non dans la séquence générale préétablie.

Le système selon la présente invention est également utilisable pour la préparation automatique de mélanges ou de dosages à partir de plusieurs composantes.

Un tel procédé est caractérisé en ce qu'il consiste à quantifier le ou les composantes, à établir, le cas échéant, un programme général de mélange ou de dosage et à individualiser ce programme par addition d'unités supplémentaires par commande à partir du poste de commande.

L'invention sera mieux comprise et d'autres buts, caractéristiques, détails et avantages de celle-ci apparaîtront plus clairement au cours de la description explicative qui va suivre faite en référence aux dessins schématiquement annexés donnés uniquement à titre d'exemple illustrant la réalisation de l'invention et dans lesquels :

La figure 1 illustre sous forme d'un schéma bloc le système et le procédé suivant la présente invention.

La figure 2 illustre schématiquement l'individualisation d'une séquence formée par une pluralité d'unités élémentaires, conformément à la présente invention ; et

Les figures 3 à 6 illustrent schématiquement chacune une situation d'une séquence d'unités d'informations élémentaires d'un cours d'enseignement, conçu suivant la présente invention.

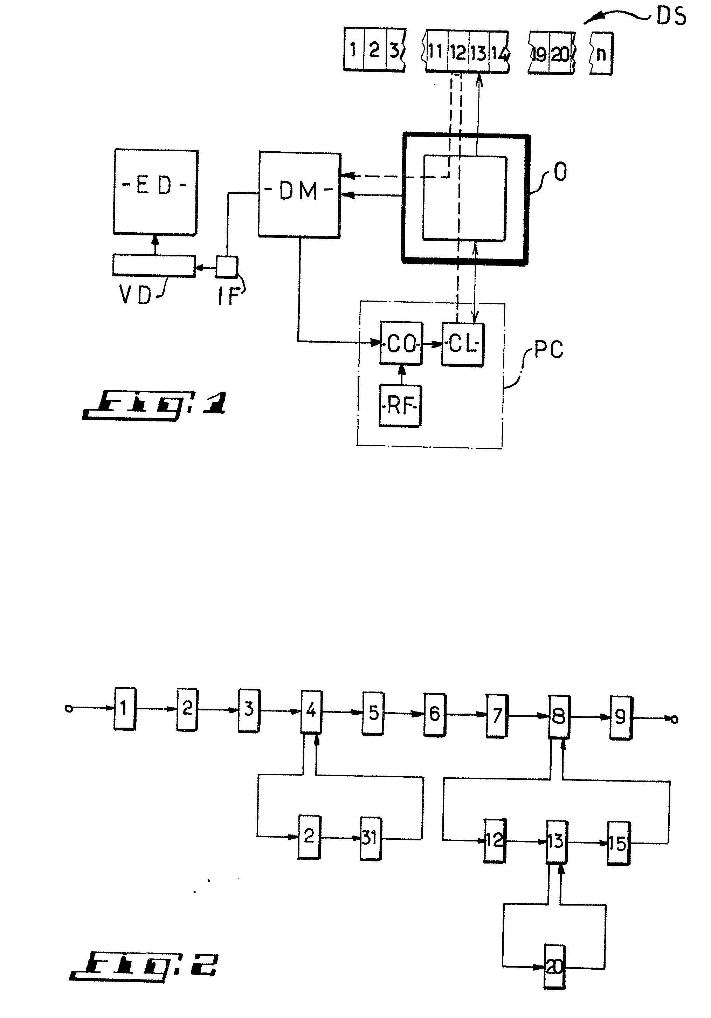

La figure 1 montre de façon schématique le principe de structure d'un système selon la présente invention. Ce système comprend essentiellement un ordinateur O en communication avec un dispositif de stockage DS d'un contenu de nature quelconque, tel que par exemple notamment de données ou d'informations ou de matériaux, et un poste de commande PC, ainsi qu'avec un dispositif de matérialisation DM ou d'exécution des instructions contenues dans le dispositif de stockage DS. Les communications sont symbolisées par des flèches.

Le dispositif de stockage DS est particulier par l'organisation interne de son contenu. Ce dernier est divisé en une multitude d'unités élémentaires 1, 2, 3...n autonomes et librement associables les unes aux autres pour la formation d'une séquence de plusieurs unités. Bien entendu chaque unité porte une référence pour être identifiable dans le dispositif de stockage DS par l'ordinateur.

Le dispositif de matérialisation et d'exécution DM peut être de toute nature appropriée en fonction de l'utilisation à laquelle est destiné le système. De façon générale, il a pour fonction de faire apparaître soit sous forme d'une image et/ou de textes le contenu informationnel d'une unité élémentaire 1 à n du dispositif de stockage DS sur un écran vidéo et/ou sur un support mobile tel que par exemple une bande de papier ou encore sous forme de déplacements et d'opérations d'un dispositif de travail.

Le poste de commande PC comporte de façon générale un moyen de commande, par exemple un clavier alphanumérique CL. Les moyens de commande peuvent être également formés par des zones tactiles sur un écran vidéo de visualisation des unités élémentaires contenues dans le dispositif de stockage DS. Cet écran vidéo pourrait être celui prévu dans le dispositif de matérialisation DM. Le poste de commande PC peut comprendre en outre un moyen de contrôle pourvu par exemple d'un moyen de référence RF et d'un comparateur CO destinés à vérifier s'il y a ou non une concordance entre les résultats produits par le système et de grandeurs de référence concrétisant les résultats que l'on désire obtenir, c'est-à-dire les résultats de consigne. En prévoyant une action du dispositif de contrôle sur le moyen de commande, symbolisée à la figure 1 par la flèche entre le comparateur CO et le clavier alphanumérique CL, des différences entre les résultats réels et les résultats souhaités ou de consigne peuvent être réduites ou totalement éliminées par incorporation d'unités élémentaires supplémentaires dans une séquence par exemple préétablie, par commande à partir du dispositif de commande PC.

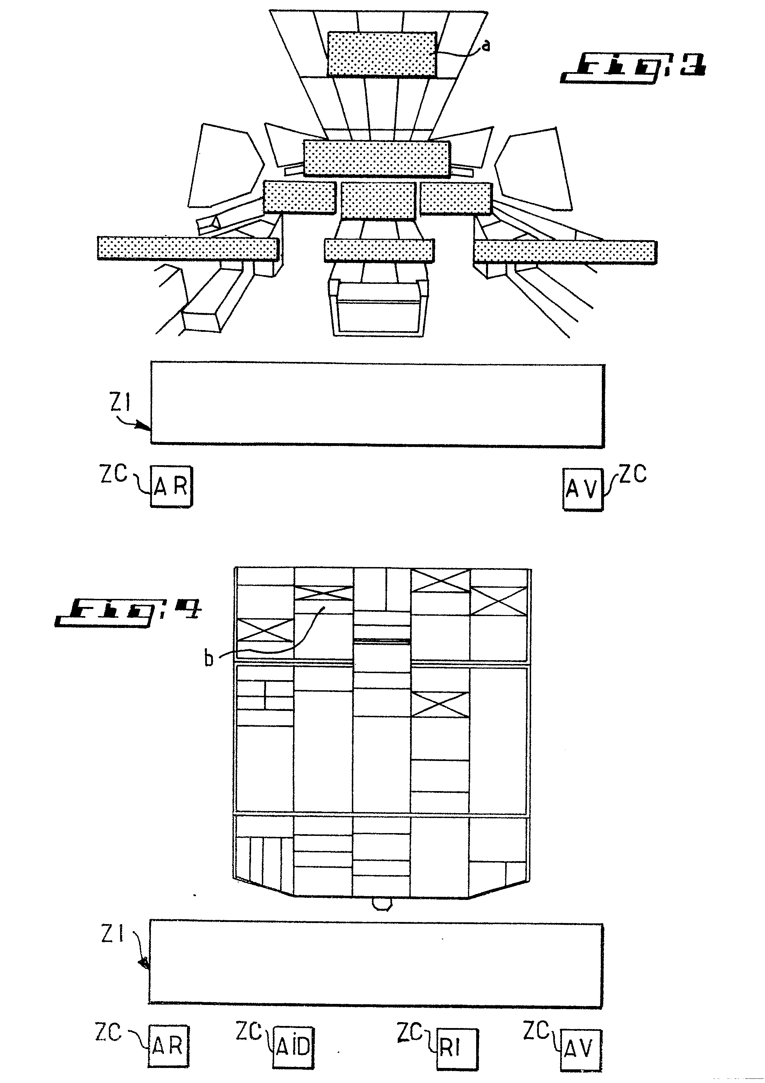

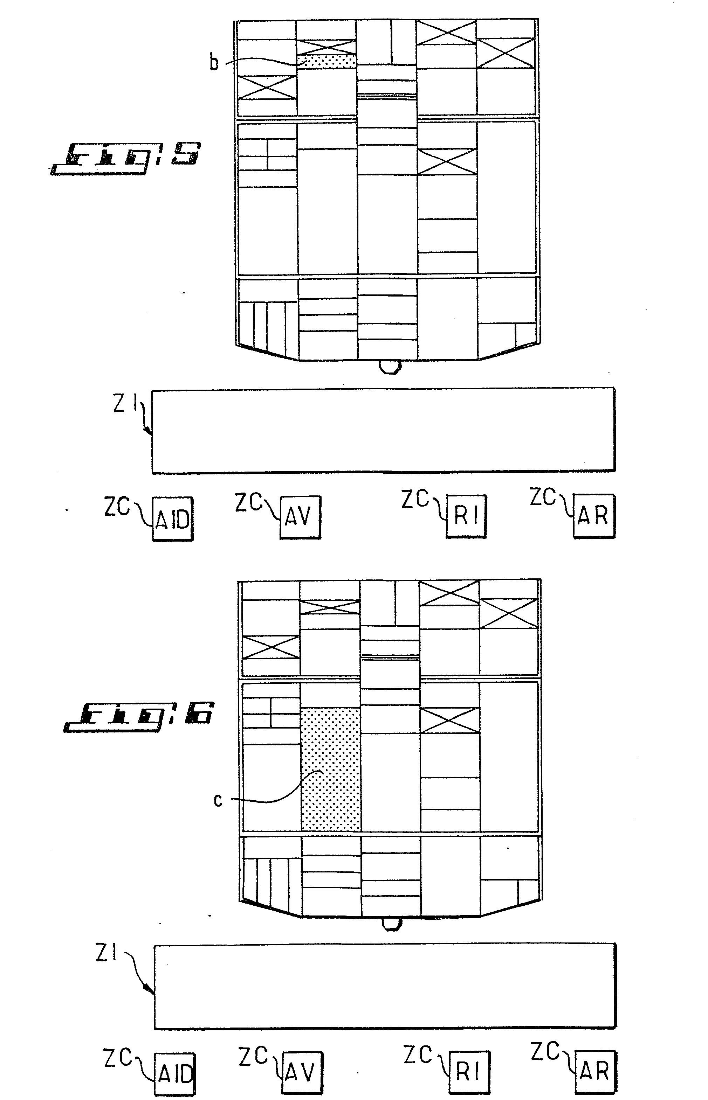

On décrira ci-après le fonctionnement du système suivant la présente invention, qui vient d'être décrit, en se reportant aux figures 1 et 2, tout d'abord de façon générale, avant de l'expliciter d'une manière plus détaillée à l'aide d'un exemple d'utilisation de

8

ce système, illustré par les figures 3 à 6.

Avantageusement, mais non obligatoirement, l'ordinateur O est programmé pour produire une séquence ou série prédéterminée d'un certain nombre d'unités élémentaires, telles que celles illustrées à la figure 2 contenant les unités 1 à 9. La figure 1 symbolise par des flèches en lignes continues la coopération entre l'ordinateur O, le dispositif de stockage DS, le dispositif de matérialisation ou d'exécution DM et éventuellement le poste de commande PC, ce dernier n'ayant pour fonction dans ce cas que de cadencer le déroulement de la séquence si cela est souhaitable. Cette coopération est tout à fait classique et ne nécessite aucune explication particulière.

Mais le système selon l'invention est conçu pour permettre l'intervention dans le déroulement d'une séquence programmée, à partir du poste de commande PC, par exemple pour adapter cette séquence à des conditions nouvelles et/ou pour réduire une différence entre les résultats produits par le système et des résultats de référence ou de consigne.

Une telle intervention provoque l'arrêt du déroulement de la séquence préétablie, en cours d'exécution, et l'insertion dans cette séquence à l'endroit d'interruption d'une ou plusieurs unités élémentaires, telles que suivant la figure 2, des unités 2 et 31 au niveau de l'unité 4 et des unités 12, 13 et 15 au niveau de l'unité 8. La figure 2 illustre encore qu'il est possible d'associer à des unités supplémentaires d'autres unités supplémentaires, par exemple l'unité 20 au niveau de l'unité 13. Bien entendu comme unité supplémentaire on peut utiliser des unités qui font déjà partie de la séquence générale, telle que l'unité 2 ; ces unités peuvent être situées en amont ou en aval de l'endroit d'interruption. Après l'insertion des unités élémentaires désirées, la séquence continue à se dérouler à partir de l'endroit d'interruption. Pour commander une interruption, il convient par exemple d'envoyer à l'ordinateur, à partir du poste de commande, un code de référence désignant l'unité à incorporer à la séquence. L'ordinateur cherche cette unité et la transfère au dispositif DM. L'intervention à fin d'insertion d'une unité peut être considérée dans le système selon la présente invention comme constituant une action directe depuis le poste de commande PC sur le dispositif de stockage et le dispositif d'exécution DM, en passant bien entendu par l'ordinateur 0. Il est évident que celui-ci doit être programmé pour être immédiatement disponible pour l'exécution de l'ordre donné. Cette caractéristique particulière de l'invention assurant l'arrêt du programme préétabli pour l'incorporation d'unités supplémentaires est symbolisée par des lignes fléchées interrompues mais traversant l'ordinateur. Bien entendu, le système selon l'invention permet d'organiser une séquence d'unités dans sa totalité, c'est-à-dire sans qu'il existe déjà une séquence générale formant une suite principale.

En se reportant maintenant aux figures 3 à 6, on décrira l'utilisation du système selon les figures 1 et 2 dans le domaine de l'enseignement assisté par ordinateur. Il est à noter que cette utilisation peut aboutir à l'établissement d'un cours d'enseignement individualisé, c'est-à-dire adapté aux besoins et à l'état de connaissance d'un élève. Ce cours peut être imprimé par exemple sur une bande en papier à l'aide d'une imprimante, et/ou défiler sur un écran vidéo. Ce dernier et l'imprimante font partie de l'équipement du dispositif de matérialisation et d'exécution DM. Cet écran est avantageusement pourvu des zones tactiles pour faciliter les interventions de l'élève dans le programme préétabli en vue de son individualisation. Pour optimaliser l'équipement du dispositif DM, on peut l'équiper d'un appareil vidéodisque VD auquel est associé un écran vidéo ED pour la visualisation des informations stockées sur le disque vidéo. Un interface IF est monté en amont de l'appareil vidéodisque VD.

Dans le cas d'utilisation de l'invention dans l'enseignement assisté par ordinateur, chaque unité élémentaire 1 à n contenue dans le dispositif de stockage DS contient une entité élémentaire d'enseignement autonome, se présentant par exemple sous forme d'une situation, chacune de ces entités élémentaires est associable aux autres. Ainsi un cours est formé par une séquence de situations. Les figures 3 à 6 montrent quatre situations qu'il faut imaginer arrangées en une séquence ou série. Comme il ressort des figures 3 à 6, chaque situation comporte dans l'exemple représenté, une image à laquelle sont associées une zone d'inscription ZI et des zones de commande ZC permettant l'intervention de l'élève. Ces zones de commande portent les signes AR, AV, AID, et RI signifiant respectivement les commandes "marche arrière", "marche avant" "la demande assistance" et "la commande retour au point d'interruption". Les zones d'inscription ZI sont réservées aux instructions et explications relatives à l'image ou aux possibilités
d'opérations ou d'interventions, offertes à l'élève.

Les situations représentées concernent les équipements d'une cabine de pilotage d'un avion. La figure
3 montre une telle cabine, avec les éléments principaux de son équipement. Chaque élément principal est
pourvu d'une zone grise constituant une zone tactile.
En touchant cette zone, on commande la visualisation
de l'unité d'enseignement en forme de situation ou de
la première unité d'une série d'informations relatives à cet élément principal.

Dans l'exemple représenté, l'élève a touché la zone
grise a désignant le panneau de bord supérieur. L'ordinateur cherche alors la première unité concernant
ce tableau dans le dispositif de stockage DS (figure
1) et commande sa visualisation sur l'écran. Sur celui-ci apparait alors la situation que montre la figure 4. On reconnait la structure complexe du tableau
supérieur, comprenant une multitude d'éléments par
exemple en forme de panneaux. Chacun de ces éléments
porte une référence non représentée. La zone d'inscription ZI de la figure 4 indique les instructions
(non représentées), entre autres informations relatives aux manoeuvres que peut commander l'élève, en
actionnant les zones de commande ZC. En touchant la
zone AR, la séquence revient en arrière, suivant un
pas, à la situation de la figure 3. Un appui sur la
zone AV fait apparaître la prochaine situation concernant le tableau supérieur. En touchant la zone AID, des informations supplémentaires seraient données.

Dans le cas présent, l'élève n'a pas voulu continuer la séquence préétablie qui prévoit la représentation de la deuxième situation relative au tableau supérieur. Pour le faire il aurait dû toucher la zone AV. Or l'élève a préféré arrêter la séquence pour se renseigner sur l'élément du tableau b formant le tableau d'évacuation. Il a tapé sur le clavier alphanumérique CL du poste de commande la référence associée à cet élément b ce qui a provoqué l'apparition sur l'écran vidéo de la situation que présente la figure 5. La zone d'inscription ZI indique les possibilités d'individualisation ou d'adaptation à l'état de connaissance de l'élève, offerte à cette étape de la séquence. Par exemple en touchant la zone AID il peut provoquer la visualisation d'informations explicatives relatives à la structure et au fonctionnement du panneau d'évacuation b. Ces informations peuvent apparaître sur l'écran principal sous forme d'une situation supplémentaire ou sur l'écran ED associé au vidéodisque VD (figure 1). En touchant les zones AV et AR l'élève pourrait commander respectivement la représentation de la prochaine situation prévue dans la série de situations préétablie relative au panneau d'évacuation ou revenir à la situation 4 pour commander l'insertion dans le cours d'enseignement des informations sur un autre élément du panneau supérieur.

Dans l'exemple représenté, l'élève a choisi la dernière possibilité et commandé par actionnement par

0088690

13

exemple du clavier alphanumérique CL la présentation de la première situation relative à l'élément c constituant un panneau de contrôle. Comme auparavant, trois possibilités pour continuer lui sont offertes. Il peut demander des informations supplémentaires (zone AID), commander que le système lui présente la situation suivante prévue dans la séquence préétablie (zone AV) ou revenir au point de départ, c'est-à-dire à la situation suivant la figure 4 et, s'il le désire, à la situation représentée à la figure 3 (zone RI).

Il ressort de l'exemple d'utilisation qui vient d'être décrit que l'organisation de la matière à enseigner en unités élémentaires, à savoir en situations, permet l'établissement d'une banque de données. L'élève, par l'intermédiaire de l'ordinateur, peut se déplacer dans cette banque de données, d'une unité élémentaire à une autre comme on le fait dans une bibliothèque. Ainsi l'élève peut établir un itinéraire individuel à travers la matière à apprendre, avantageusement à partir d'un chemin préétabli constituant un guide général.

Il est évident que la présente invention n'est pas limitée au cas d'utilisation donné ci-avant. L'invention est applicable à tous les domaines caractérisés par le déroulement d'une opération ou de traitement se présentant sous forme d'une séquence d'un certain nombre d'étapes. Selon l'invention on quantifie les étapes pour pouvoir ensuite individualiser la séquence par incorporation d'une ou de plusieurs unités élémentaires. Par exemple l'invention pourrait être

14

utilisée pour le mélange ou dosage de plusieurs composantes de matière. L'individualisation consisterait dans ce cas à quantifier les différentes composantes en quantités élémentaires, c'est-à-dire minimum, que l'on peut ensuite ajouter à un mélange déjà fait, en arrêtant le déroulement du processus de mélange à l'endroit désiré et en ajoutant le nombre désiré d'unités élémentaires. Bien entendu la possibilité de contrôler à tout moment, grâce au moyen de comparaison et de référence prévu dans le poste de commande, ajoute à la souplesse inhérente au système et aux procédés selon l'invention encore la précision et fiabilité du résultat.

En revenant encore une fois à l'exemple relatif à l'enseignement assisté par l'ordinateur, on peut contrôler ou surveiller l'assimilation ou la compréhension par l'élève de la matière enseignée en posant des questions appropriées. Dans ce cas, les valeurs de référence sont formées par des réponses exactes auxquelles le comparateur comparerait les réponses données par l'élève. En fonction du résultat de la comparaison, l'élève pourrait orienter ou individualiser le cours qu'il est en train de suivre.

La présente invention est également applicable dans le domaine de l'usinage de pièces. Dans ce cas, les unités élémentaires seraient constituées chacune par le programme élémentaire d'une opération de travail à effectuer par un outil. En insérant une ou plusieurs opérations dans une séquence d'opérations le cas échéant préétablies on pourrait individualiser la pièce à guise par simple commande à partir du poste

15

de commande, sans qu'il soit nécessaire d'établir préalablement un programme complet pour la fabrication de la pièces indivisualisée, ce qui serait très cher et par conséquent inadmissible si le prix de revient ne doit pas être trop élevé.

Revendications

1. Système conversationnel avec un poste de commande, pour le traitement séquentiel d'une matière de nature quelconque, notamment informationnelle, le cas échéant assisté par ordinateur, du type comprenant un dispositif de stockage de la matière à traiter, des moyens pour matérialiser cette matière et un poste de commande permettant à l'utilisateur d'intervenir dans ledit traitement séquentiel, caractérisé en ce que ladite matière est stockée dans le dispositif de stockage DS sous forme d'unités élémentaires autonomes (1 - n) le cas échéant programmées, librement associables les unes aux autres pour former des séquences désirées d'unités élémentaires, les moyens de matérialisation DM sont adaptés pour matérialiser sélectivement le contenu des unités élémentaires (1 - n) et des moyens CL sont associés au poste de commande PC pour permettre à l'utilisateur d'insérer au moins une unité élémentaire (1 - n) supplémentaire à un endroit désiré d'une séquence, le cas échéant préétablie.

2. Système selon la revendication 1, pour l'établissement d'un cours d'enseignement, caractérisé en ce que le dispositif de stockage DS est adapté pour contenir des unités d'enseignement élémentaires relatives à la matière enseignée, les moyens de matérialisation DM comprennent un support de visualisation d'une séquence d'unité élémentaire d'enseignement, tel qu'un écran vidéo ou un support mobile par exemple une bande de papier sur laquelle la séquence d'unités peut être imprimée.

3. Système selon la revendication 1, pour le mélange ou dosage de plusieurs composantes de matières, caractérisé en ce que les unités élémentaires (1 - n) contenues dans le dispositif de stockage DS sont formées par des quantités élémentaires d'une matière et en ce que les moyens de matérialisation DM comprennent un dispositif de dosage.

4. Système selon l'une des revendications précédentes, caractérisé en ce qu'il comprend des moyens de contrôle ou de comparaison CO des résultats produits par une séquence d'unités élémentaires, vis-à-vis des valeurs de consigne établies par un dispositif de référence RF.

5. Système selon la revendication 4, caractérisé en ce que les moyens de contrôle ou de comparaison CO sont reliés aux moyens de commande CL pour au moins réduire une différence entre les résultats réels produits par le système et les valeurs de consigne, par l'insertion d'unités élémentaires supplémentaires dans la séquence préétablie.

6. Procédé d'utilisation du système selon la revendication 1 dans l'enseignement, le cas échéant assisté par ordinateur, caractérisé en ce qu'il consiste à traiter la matière à enseigner et la matière en rapport avec celle-ci, pour former une multitude d'unités d'enseignement élémentaires, autonomes, librement associables les unes aux autres, à établir, le cas échéant, une séquence générale d'unités d'enseignement et à prévoir la possibilité d'individualiser cette séquence par l'insertion d'unités supplémentaires, par

18

commande à partir du poste de commande.

7. Procédé selon la revendication 6, caractérisé en ce que, pour l'individualisation d'une séquence, on commande, à partir du poste de commande, le déroulement de la séquence, l'interruption de celle-ci à l'endroit désiré, l'incorporation des unités élémentaires désirées et la reprise du déroulement de la séquence au point d'interruption.

8. Procédé selon l'une des revendications 6 ou 7, caractérisé en ce que les éléments supplémentaires peuvent être des éléments déjà continus dans la séquence générale préétablie.

9. Procédé selon l'une des revendications 6 à 8, caractérisé en ce que l'on visualise les séquences individualisées sur un écran-vidéo.

10. Procédé selon l'une des revendications 6 à 9, caractérisé en ce que l'on imprime une séquence individualisée sur un support permanent tel qu'une bande de papier, pendant l'opération de l'individualisation.

11. Procédé selon l'une des revendications 6 à 10, caractérisé en ce que chaque unité d'enseignement élémentaire peut comporter une image et/ou des textes explicatifs.

12. Procédé selon l'une des revendications 6 à 11, caractérisé en ce que la commande d'insertion d'unités élémentaires supplémentaires dans une séquence est réalisée par l'écriture de la référence associée à l'unité élémentaire, avantageusement, à l'aide d'un clavier alphanumérique ou en touchant une zone tactile correspondant de l'écran vidéo.

13. Procédé d'utilisation du système selon la revendication 1, pour commander le mélange ou le dosage de différentes composantes de matières, caractérisé en ce qu'il consiste à quantifier ces composantes pour former des quantités élémentaires minimum et de commander l'addition d'une quantité désirée d'une composante sous forme d'un nombre approprié de quantités élémentaires.

14. Système selon l'une des revendications 1 à 5, caractérisé en ce que les moyens de matérialisation DM comprennent un appareil de vidéodisque DV auquel est associé un écran ED de représentation des informations supplémentaires spécifiques.

15. Procédé d'utilisation du système selon la revendication 1, 2 ou 5, pour l'usinage de pièces, caractérisé en ce que l'on quantifie les opérations d'usinage et commande à partir du poste de commande, l'addition d'au moins une opération aux opérations déjà effectuées ou l'insertion d'au moins une opération dans une séquence d'opérations le cas échéant préétablie.

1/3

0088690

Fig. 1

Fig. 2

0088690

Fig. 3

a

Z1

ZC AR    AV ZC

Fig. 4

b

Z1

ZC AR    ZC AID    ZC RI    ZC AV

0088690

Fig. 5

Fig. 6

**Office européen des brevets**

## RAPPORT DE RECHERCHE EUROPEENNE

EP 83 40 0453

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | FR-A-2 436 437 (SOCIETE DE REALISATIONS EN INFORMATIQUE ET AUTOMATISME 'STERIA') * Figures 1-3; page 3, ligne 19 - page 7 * | 1-11 | G 09 B 7/04 G 06 F 15/20 |
| | --- | | |
| X | EP-A-0 000 854 (LIGNES AERIENNES INTERIEURES "AIR INTER") * Revendications 1-7 * | 1,3-8, 11 | |
| | ----- | | |

**DOMAINES TECHNIQUES RECHERCHES (Int. Cl. 3)**

G 09 B
G 06 F

Le présent rapport de recherche a été établi pour toutes les revendications

| Lieu de la recherche LA HAYE | Date d'achèvement de la recherche 13-06-1983 | Examinateur CARDON A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82